# EUROPEAN PATENT APPLICATION

(11) **EP 4 553 724 A1**
(43) Date of publication of application: **14.05.2025**
(21) Application number: 23208419.4
(22) Date of filing: 08.11.2023
(51) Int. Cl.: G06Q 10/04, G06N 20/20

(54) **TIME-SERIES FORECASTING BASED ON ARTIFICIAL INTELLIGENCE AND STATISTICAL METHODS ENSEMBLE**

(71) Applicant: UAB Rivile, 51480 Kaunas (LT)
(72) Inventor: Kontrimas, Vilius, LT-46261 Kaunas (LT); Vaiciukynas, Evaldas, LT-51281 Kaunas (LT)
(74) Representative: Zaboliene, Reda

(57) **Abstract**

The present invention (DI/SM-TS-RIV technology) stands at the forefront of artificial intelligence (AI) innovation, offering a groundbreaking approach to time series forecasting and management. Utilizing a sophisticated blend of AI and statistical methodologies, this technology introduces a multi-parameter algorithm that autonomously synthesizes a suite of AI and statistical techniques tailored for precise time series prediction, leveraging the power of automatic machine learning on existing datasets. As a pioneering solution in the market, this invention is unparalleled globally, marking a significant leap forward in predictive analytics. This technology is not only innovative but also versatile, designed for seamless integration with analytical platforms such as: MATLAB, R, Statistica, SPSS, Qubole, BigML, Statwing, Knime, RapidMiner, Pentaho, Domo, Sisense, Open Refine, Orange, Weka, Trifacta, Data Science Studio, DataPreparator, DataCracker, Tanagra, H2O and others. Its introduction promises to transform the landscape of robotic forecasting, providing an unmatched tool for researchers and industries seeking to harness the predictive power of AI with unprecedented efficiency and accuracy.

## Description

### FIELD OF THE INVENTION

The present invention pertains to the intersection of artificial intelligence and automated machine learning, with applications in robotic forecasting and time series analysis for diverse data types. This innovation synthesizes AI with statistical techniques to improve predictions for time series, accommodating a variety of data such as sensor signals and inputs from various devices or applications.

### DISCUSSION OF BACKGROUND ART

Predictive analytics transcends mere technological application; it is a pivotal element in driving business strategy and operational efficiency. The power to forecast future trends by analyzing historical / input parameters is instrumental in anticipating market demands and customer behaviors. In the realm of business or any kind of technology, such as retail or manufacturing, this predictive prowess facilitates finely-tuned inventory control, ensuring that supply aligns with consumer demand, thereby reducing waste, optimizing resources and maximizing efficiency.

For instance, by leveraging data from past sales and market conditions, companies can predict product popularity, adjust production schedules, and manage stocks with unprecedented precision. This forward-looking approach is also indispensable in the financial sector, where understanding potential market shifts can inform investment strategies and risk management. The integration of various data types - from economic indicators to social media trends-into predictive models enables businesses to stay a step ahead, crafting adaptive strategies that can pivot with market dynamics. Thus, predictive analytics is not just a tool for forecasting; it's an essential aspect of modern business acumen that supports sustainable growth and competitive advantage.

In the vast arena of predictive analytics, the scope extends beyond sales data to encompass the nuanced realm of sensor-generated data, which holds profound implications, particularly in the field of medicine, physics or other fields. Advanced predictive models that assimilate real-time biometric data from a myriad of sensors can revolutionize patient care by forecasting health events before they occur. This preemptive capability allows for timely interventions, altering the course of treatment to prevent adverse outcomes. Incorporating this broader spectrum of data, the predictive models do not just serve the commercial sectors but also underpin critical advancements in healthcare. By analyzing trends from historical physiological data, these models can predict patient deterioration, potential disease outbreaks, and the spread of infections, thus enabling healthcare systems to allocate resources more effectively and improve patient outcomes. When this medical foresight is combined with business insights-predicting market demands, optimizing stock management, and responding to consumer needs-the potential of predictive analytics becomes truly vast. It equips industries ranging from commerce to healthcare with the tools to make data-driven decisions that are not just reactive but proactive, ensuring that every domain where prediction holds value can benefit from the far-reaching capabilities of modern predictive technologies. This holistic approach not only refines operational efficiencies but also fosters innovation and saves lives, underscoring the indispensable role of predictive analytics in both business acumen and healthcare excellence.

A patent document US2004230470 (published on 2004-11-18) describes a system that utilizes econometric techniques and potentially other econometric modelling methods for analyzing and forecasting consumer demand and retail-load adjustments based on historical data. The focus is on quantifying the effects of marketing activities on sales, employing what-if analyses to project the impacts of marketing spending on future consumer demand, and providing reports on demand forecast errors with potential reasons for those errors. This Prior Art focuses primarily on econometric techniques for forecasting and what-if analysis, which does not does explicitly mention the use of AI including. It may employ dynamic regression or similar techniques, which are statistical in nature, it does not suggest an integrated, robotic generation of an ensemble (in Prior Art this term is also can be found as "collective" or "committee", or "combination") of AI and statistical methods as per this invention description.

Also there is a patent document US2023244947 (published on 2023-08-03) describes a method that uses a data-driven approach to forecast time series data, emphasizing the handling of dynamic systems. It outlines a process that includes receiving time series data, applying a frequency attention layer for seasonal representation, an exponential attention layer for growth representation, and generating forecasts using a decoder based on these representations. While both the invention and the Prior Art aim to forecast time series data, the Prior Art specifies a method that involves particular analytical layers and focuses on frequency domain analysis for seasonal and trend representations. In contrast, the invention broadly discusses a technology that combines AI and statistical methods, in a more automated way.

A patent document US2020294067 (published on 2020-09-17) focuses on enhancing product demand forecasting, particularly for products with limited historical sales data. It leverages partitional clustering along with dynamic time warping to correlate sparse data with extensive data from other products or product groups, creating a clustering model that can forecast demand based on prototype time series for each cluster. It presents a method tailored for forecasting with limited data by using clustering and time warping techniques to inform the forecast. In contrast, the invention indicates a technology that employs a ensemble of AI and statistical methods to address time series forecasting in a broad and more automated manner.

And, finally, there is known document CA3006988 (published on 2017-06-22) describes a system and method for time series forecasting that includes generating a composite from multiple datasets through normalization and formula configuration. It highlights a process that involves selecting various forecasting parameters, adjustments, indicators, and weights to create a forecast. The system is designed to ensure accuracy by restricting transformations that would decrease it and updates forecasts by locking the time domain for certain indicators. It also emphasizes the output and storage of forecasts, allowing for reuse as an indicator.

While both the invention and the Prior Art aim to produce forecasts from time series data, the Prior Art is characterized by its method for dataset combination / ensemble and forecast generation, with emphasis on user-defined parameters and accuracy management. In contrast, the invention focuses on a automated, AI-driven approach, self-optimizing and less detailed in the description regarding user interaction and application outputs. The key distinctions lie in the automation, adaptability, and specific methodologies employed in the forecasting process.

Thus, the present invention (DI/SM-TS-RIV technology), which will be described in more details below, represents an advancement over the Prior Art by integrating both AI and statistical methods to automate the process of time series forecasting. This combination / ensemble harnesses the strength of AI for pattern recognition and adaptability, along with the robustness of statistical models, to deliver potentially more accurate forecasts. Its emphasis on automation facilitates a hands-off approach, significantly reducing the manual input required in traditional methods. This level of automation, paired with the technology's adaptability, enables the system to self-optimize over time, ensuring that it remains efficient in the face of evolving data patterns and trends.

### SUMMARY OF THE INVENTION

The present invention (DI/SM-TS-RIV technology) stands at the forefront of artificial intelligence (AI) innovation, offering a groundbreaking approach to time series forecasting and management. Utilizing a sophisticated blend of AI and statistical methodologies, this technology introduces a multi-parameter algorithm that autonomously synthesizes a suite of AI and statistical techniques tailored for precise time series prediction, leveraging the power of automatic machine learning on existing datasets. As a pioneering solution in the market, this invention is unparalleled globally, marking a significant leap forward in predictive analytics. This technology is not only innovative but also versatile, designed for seamless integration with analytical platforms such as: MATLAB, R, Statistica, SPSS, Qubole, BigML, Statwing, Knime, RapidMiner, Pentaho, Domo, Sisense, Open Refine, Orange, Weka, Trifacta, Data Science Studio, DataPreparator, DataCracker, Tanagra, H2O and others. Its introduction promises to transform the landscape of robotic forecasting, providing an unmatched tool for researchers and industries seeking to harness the predictive power of AI with unprecedented efficiency and accuracy.

### BRIEF DESCRIPTION OF THE DRAWINGS

Fig. 1 Unified Modeling Language (UML) activity signals / parameters processing diagram (general view)
Fig. 2. Unified Modeling Language (UML) activity diagram (first part), which presents essential functional steps in a visual form, where inputs are on the left side and outputs are on the right side - *Preparation phase.*
Fig. 3. UML activity diagram (second part), which presents essential functional steps in a visual form, where inputs are on the left side and outputs are on the right side - *Training phase.*
Fig. 4. UML activity diagram (third part), which presents essential functional steps in a visual form, where inputs are on the left side and outputs are on the right side - *Production phase.*

### DETAILED DESCRIPTION OF THE INVENTION

In the era of technological expansion, enterprises are increasingly turning towards IT robotization to streamline operations, specifically in the realms of sales and inventory forecasting. The integration of artificial intelligence (AI) with statistical methods has become a cornerstone for those aiming to maximize efficiency, resource allocation, and accuracy in predicting future market trends and stock requirements. A multiparametric algorithm that harnesses both AI and advanced statistical techniques is at the heart of this transformation. This invention (the DI/SM-TS-RIV technology) addresses this global need by robotically generating a collaborative framework of AI and statistical methodologies through automatic machine learning, applied to existing time series data. As businesses strive for greater precision and predictive prowess, this innovative technology provides a robust solution, capable of integrating with various analytical tools and revolutionizing the approach to robotic forecasting.

The goal of this invention / project is to develop a new technology for forecasting and managing time series data, such as sales figures, using a blend of artificial intelligence and statistical methods - termed the DI/SM-TS-RIV technology. This involves an advanced multi-parameter algorithm that brings together a group of AI and statistical methods to predict trends over time. Time series data are sequences of data points collected or recorded at regular time intervals, which this technology aims to analyze and predict.

In the forge of this technology the system must navigate through scientific challenges. The primary issue lies in integrating traditional statistical techniques, typically used in isolation for time series analysis, with artificial intelligence into a unified system crafted by automatic machine learning from existing time series data.

Additionally, the challenge faces the task of crafting a multi-parameter algorithm capable of:
Evaluating and selecting from an array of approximately 15-20 different forecasting methods to determine the most accurate predictions for a given time series, thereby minimizing future prediction errors;
Detecting and correcting anomalies or outliers in the data to refine the dataset for enhanced processing by AI and statistical models.

These objectives are critical to ensure that the technology can provide reliable and precise forecasts.

Right now, you can find forecasting tools on the market that use either artificial intelligence (AI) or statistical methods to predict future trends. However, there isn't a technology out there that mixes both AI and statistics together as a team to work on time-series data - data that tracks how things change over time. Also, none of these tools use a multi-parameter algorithm, which is a fancy way of saying a set of rules that can consider many different factors at once to make better predictions.

As of now, there are no identical robotic solutions or technologies known in the market, which means that the newly created DI/SM-TS-RIV technology and the products developed from it will be innovative and without any equivalents globally.

This invention is a type of artificial intelligence that uses robots to predict and manage time-based data. It works with a special algorithm that combines different AI and statistical methods to understand and learn from the data over time. This makes it smart at forecasting what might happen next.

The main purpose of this invention (of the "DI/SM-TS-RIV technology") is that it can be widely used. This means it can be added into various software tools that handle data processing and analysis, also known as Data Analysis Tools. For example, it can work with different math, statistics, and artificial intelligence software like: Matlab, R, Statistica, SPSS, Qubole, BigML, Statwing, Knime, RapidMiner, Pentaho, Domo, Sisense, Open Refine, Orange, Weka, Trifacta, Data Science Studio, DataPreparator, DataCracker, Tanagra, H2O and others. It's also suitable for organizations like universities and IT companies that want to implement the technology based on detailed technical descriptions.

Following please find the more detailed description of the invention - it contains 3 parts: *preparation phase, training phase,* and *production phase.* Note that in this description, univariate time series forecasting algorithms are called "methods", they do forecast, whereas random forest machine learning algorithms are called "assistants", whey do ensemble (committee) assembly.

### Preparation phase.

A representative set of time series is augmented by taking each time series and obtaining 3 subsegments (the full series and its newer and older halves) for each forecasting horizon. The full series subsegment is obtained by removing the last *h* observations (where *h* is the forecasting horizon size) and reserving them for evaluating forecasting methods and calculating forecasting errors. A minimal subsegment size rule is used to screen the resulting subsegments and leave only those long enough to use in forecasting. The minimal subsegment size rule used in experiments was "train/test = 80/20", which means that "subsegment is considered valid to use in forecasting if its length is equal or exceeds 4 forecasting horizons". After the augmentation step, time series are:
1. characterized through feature engineering, using 3 transformations and 133 features;
2. forecasted for each specific horizon, using 23 univariate time series forecasting methods.
Forecasting errors are relied upon to rank 23 methods. Methods are ranked for each of 6 forecasting error types (RMSE, MAE, MDAE, MAAPE, SMAPE, and MASE), and individual error-type dependent rankings are averaged out into the overall ranking. When two methods average out into identical ranking, tied cases in the overall ranking are resolved by comparing the method's runtime and prioritizing the faster one. The final ranking of 23 methods becomes the target attribute for the A1 assistant model in the later training phase. Further, the final ranking is used in creating fused forecasts of ensembles increasing in size. Two weighting schemes are considered when averaging predictions into fused forecast: equal (simple weights) and weighted (weights determined by reciprocal rank). In case an ensemble of some specific size and weighting scheme succeeds in outperforming the single best method and providing the lowest forecasting errors, its size and weighting type are registered as optimal and become the target attributes in A2 and A3 assistant models, respectively. These steps are performed by "*A extract subsegments featurize forecast.R"* script. The last step in this phase is performed by *"B construct data matrices for assistants.R*" script, which combines feature vectors of subsegments from the representative set of time series with target attributes for each assistant and some additional meta-information, such as data frequency and forecasting horizon. Besides, for A1 assistant, forecasting method related meta-information is considered as well.

### Training phase.

Assistant models solve different tasks and seek to model different target attributes:
1. A1 model learns to recommend the final rank for a forecasting method through regression task, hyperparameter tuning/optimization aims to minimize the root mean squared logarithmic error (RMSLE), where loss metric is more sensitive to errors in lower/ better ranks;
2. A2 model learns to recommend the optimal size of forecasting ensemble through regression task, hyperparameter tuning/optimization seeks to minimize the root mean squared error (RMSE);
3. A3 model learns to recommend the optimal weighting type when fusing ensemble members' forecasts through detection (classification) task, hyperparameter tuning/optimization seeks to minimize logistic loss (LogLoss).

Random forest implementation in R package *ranger* is used here as the machine learning meta-model. Hyperparameter tuning is performed by Bayesian optimization in R package *tuneRanger.* The forest size is held fixed (num.trees = 256). Two hyperparameters are optimized - the size of randomly selected feature subspace mtry and pruning strength by limiting tree complexity through *min.node.size.* Meta-information is forced into tree structure by specifying it through *always.split.variables* parameter. This phase is performed by "*C training phase make assistant models.R"* script.

Note: the source code also contains slightly modified function *tune_ranger()* from *tuneRanger* R package. The modification disables the averaging of hyperparameters of 5% of best models, because authors think it is detrimental to performance. Such an averaging would be valid for a linear problem. Tuning a random forest model is a nonlinear problem and there is no guarantee that such an average would indeed perform well.

### Production phase.

Time series data is prepared by ensuring that no values or dynamics are lacking (no NA values and not all values constant). The feature vector of proper time series is calculated and provided together with meta-information to assistant models A1-A3 to obtain recommendations concerning the forecasting ensemble's formation. After recommendations are delivered, the forecasting ensemble is created by fitting its members to the time series data at hand. Finally, forecasts from individual members are averaged using the recommended weighting scheme to obtain the final forecast. The "*D production phase benchmarking run.R"* script simulates this phase and also compares the performance of DI/SM-TS-RIV algorithm with benchmarks Theta and Comb (used also by M4 forecasting competition).

The entire process comprises the following general steps:
receiving signals (A) / parameters as time-series from different kind of output multi-channels devices / applications;
processing signals (B) them using mentioned three phases: preparation, training, and production) using ensemble / combination of AI and Statistical methods;
generating (C) forecasted time-series based on processing results.

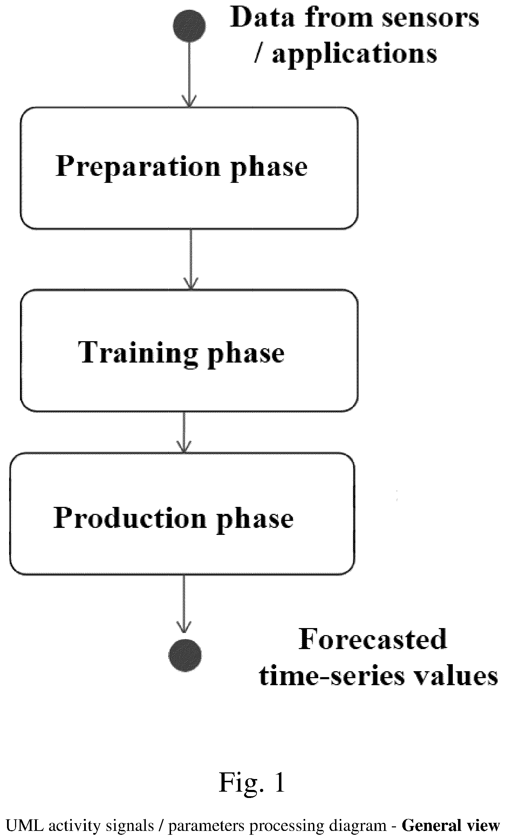

The processing signals (B) are shown in the Fig. 1-4:
Fig. 1 represents entire process (general view);

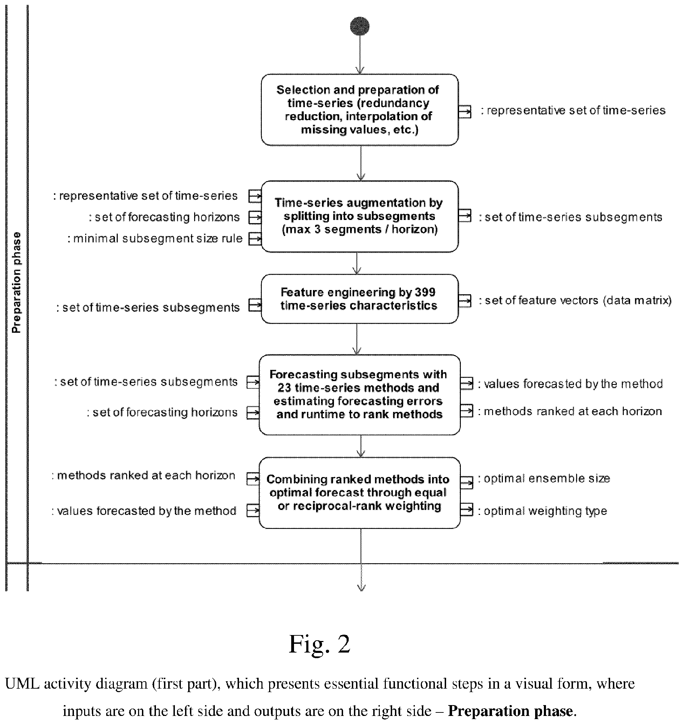

Fig. 2 represents steps of the *preparation phase;*

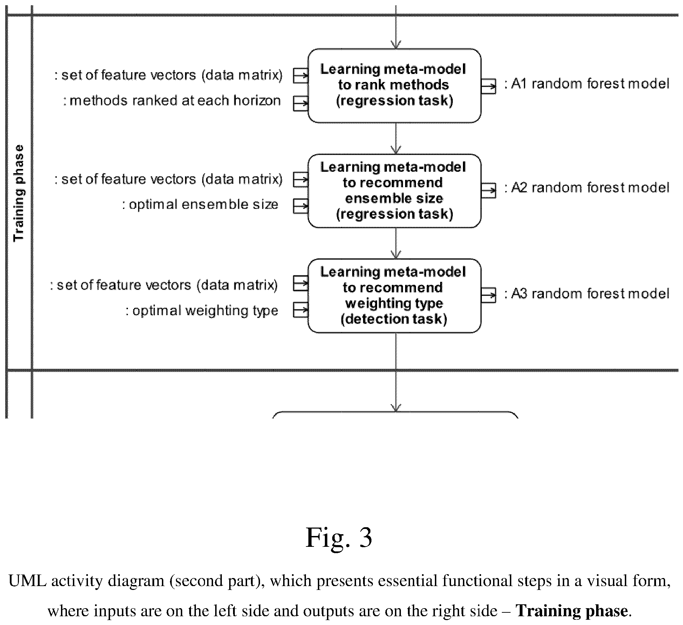

Fig. 3 represents steps of the *training phase;*

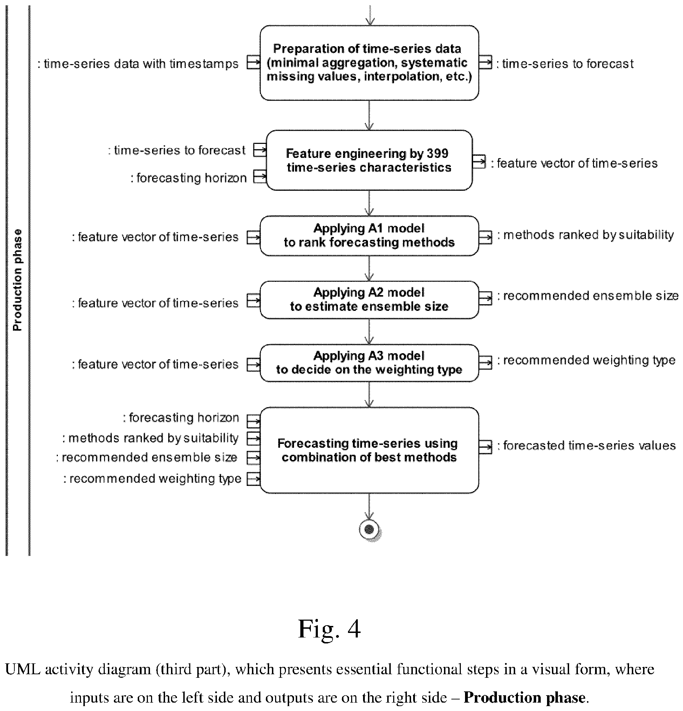

Fig. 4 represents steps of the *production phase.*

The *preparation phase* module (Fig. 2) comprises the following modules / steps of protocol:
"selection and preparation of time-series (comprising redundancy reduction, interpolation of missing values)" module / step which
   receives signals / parameters as time-series from different kind of output multi-channel devices (sensors / applications), and
   outputs "representative set of time-series";
"time-series augmentation by splitting into subsegments (max 3 segments / horizon) "module / step which
   receives "representative set of time-series", "set of forecasting horizons", and "minimal subsequent size rule", and
   outputs "set of time-series subsegments";
"feature engineering by 399 time-series characteristics" module / step which
   receives "set of time-series subsegments" and
   outputs "set of feature vectors (data matrix);
"forecasting subsegments with 23 time-series methods and estimating forecasting errors and runtime to rank methods" module / step which
   receives "set of time-series subsegments" and "set of forecasting horizons", and
   outputs "values forecasted by the method" and "methods ranked at each horizon";
"combining ranked methods into optimal forecast through equal or reciprocal-rank weighting" module / step which
   receives "methods ranked at each horizon" and "values forecasted by the method", and
   outputs "optimal ensemble size" and "optimal weighting type" to *training phase* module / step.

The *training phase* (Fig. 3) comprises the following modules / steps of protocol:
"learning meta-model to rank methods (regression task)" module / step which
   receives "set of feature vectors (data matrix)" and "methods ranked at each horizon", and
   outputs "A1 random forest model";
"learning meta-model to recommend ensemble size (regression task)" module / step
   which
   receives "set of feature vectors (data matrix)" and "optimal ensemble size", and
   outputs "A2 random forest model";
"learning meta-model to recommend weighting type (detection task)" module / step
   which
   receives "set of feature vectors (data matrix)" and "optimal weighting type", and
   outputs "A3 random forest model" to *production phase* module / step.

The *production phase* (Fig. 4) comprises the following modules / steps of protocol:
"preparation of time-series data (comprising minimal aggregation, systematic missing values, interpolation)" module / step which
   receives "time-series data with timestamps", and
   outputs "time-series to forecast";
"feature engineering by 399 time-series characteristics" module / step which
   receives "time-series to forecast" and "forecasting horizon", and
   outputs "feature vector of time-series";
"applying A1 model to rank forecasting methods" module / step which
   receives "feature vector of time-series", and
   outputs "methods ranked by suitability";
"applying A2 to estimate ensemble size" module / step which
   receives "feature vector of time-series", and
   outputs "recommended ensemble size";
"applying A3 model to decide on the weighting type" module / step which
   receives "feature vector of time-series", and
   outputs "recommended weighting type";
"forecasting time-series using ensemble / combination of best methods" module / step which
   receives "forecasting horizon", "methods ranked by suitability", "recommended ensemble size" and "recommended weighting type", and
   outputs "forecasted time-series values".

## Claims

1. A method, to forecast times-series values, comprising the following steps:
receiving signals / parameters as time-series from different kind of output (multi-channels) devices / applications;
processing signals;
generating "forecasted time-series values" based on processing results;
**characterized in that**:
the processing signals step comprises three phases:
*preparation phase;*
*training phase;* and
*production phase;*
wherein
the mentioned three phases use ensemble of AI and Statistical Methods to achieve the best possible forecasting results.

2. The method according to claim 1, **characterized in that** the *preparation phase* comprises the following steps (of protocol):
"selection and preparation of time-series (comprising redundancy reduction, interpolation of missing values)" step which
receives signals / parameters as time-series from different kind of output multi-channel devices (sensors / applications), and
outputs "representative set of time-series";
"time-series augmentation by splitting into subsegments (max 3 segments / horizon)" step which
receives "representative set of time-series", "set of forecasting horizons", and "minimal subsequent size rule", and
outputs "set of time-series subsegments";
"feature engineering by 399 time-series characteristics" step which
receives "set of time-series subsegments" and
outputs "set of feature vectors (data matrix);
"forecasting subsegments with 23 time-series methods and estimating forecasting errors and runtime to rank methods" step which
receives "set of time-series subsegments" and "set of forecasting horizons", and
outputs "values forecasted by the method" and "methods ranked at each horizon";
"combining ranked methods into optimal forecast through equal or reciprocal-rank weighting" step which
receives "methods ranked at each horizon" and "values forecasted by the method", and
outputs "optimal ensemble size" and "optimal weighting type" to *training phase* step.

3. The method according to claim 1, **characterized in that** the *training phase* comprises the following steps (of protocol):
"learning meta-model to rank methods (regression task)" step which
receives "set of feature vectors (data matrix)" and "methods ranked at each horizon", and
outputs "A1 random forest model";
"learning meta-model to recommend ensemble size (regression task)" step which
receives "set of feature vectors (data matrix)" and "optimal ensemble size", and
outputs "A2 random forest model";
"learning meta-model to recommend weighting type (detection task)" step which
receives "set of feature vectors (data matrix)" and "optimal weighting type", and
outputs "A3 random forest model" to *production phase* step.

4. The method according to claim 1, **characterized in that** the *production phase* comprises the following steps (of protocol):
"preparation of time-series data (comprising minimal aggregation, systematic missing values, interpolation)" step which
receives "time-series data with timestamps", and
outputs "time-series to forecast";
"feature engineering by 399 time-series characteristics" step which
receives "time-series to forecast" and "forecasting horizon", and
outputs "feature vector of time-series";
"applying A1 model to rank forecasting methods" step which
receives "feature vector of time-series", and
outputs "methods ranked by suitability";
"applying A2 to estimate ensemble size" step which
receives "feature vector of time-series", and
outputs "recommended ensemble size";
"applying A3 model to decide on the weighting type" step which
receives "feature vector of time-series", and
outputs "recommended weighting type";
"forecasting time-series using ensemble of best methods" step which
receives "forecasting horizon", "methods ranked by suitability", "recommended ensemble size" and "recommended weighting type", and
outputs "forecasted time-series values".

5. A system, to forecast times-series values, comprising the following modules:
receiving signals / parameters module as time-series from different kind of output (multi-channels) devices / applications;
processing signals module;
generating "forecasted time-series values" module based on processing results
of the mentioned processing signals module;
**characterized in that**:
the processing signals module comprises the following three modules:
*preparation phase* module;
*training phase* module; and
*production phase* module;
wherein
the mentioned three modules use ensemble of AI and Statistical methods to achieve the best possible forecasting results.

6. The system according to claim 5, **characterized in that** the *preparation phase* module comprises:
"selection and preparation of time-series (comprising redundancy reduction, interpolation of missing values)" module which
receives signals / parameters as time-series from different kind of output multi-channel devices (sensors / applications), and
outputs "representative set of time-series";
"time-series augmentation by splitting into subsegments (max 3 segments / horizon)" module which
receives "representative set of time-series", "set of forecasting horizons", and "minimal subsequent size rule", and
outputs "set of time-series subsegments";
"feature engineering by 399 time-series characteristics" module which
receives "set of time-series subsegments" and
outputs "set of feature vectors (data matrix);
"forecasting subsegments with 23 time-series methods and estimating forecasting errors and runtime to rank methods" module which
receives "set of time-series subsegments" and "set of forecasting horizons", and
outputs "values forecasted by the method" and "methods ranked at each horizon";
"combining ranked methods into optimal forecast through equal or reciprocal-rank weighting" module which
receives "methods ranked at each horizon" and "values forecasted by the method", and
outputs "optimal ensemble size" and "optimal weighting type" to *training phase* module.

7. The system according to claim 5, **characterized in that** the *training phase* module comprises:
"learning meta-model to rank methods (regression task)" module which
receives "set of feature vectors (data matrix)" and "methods ranked at each horizon", and
outputs "A1 random forest model";
"learning meta-model to recommend ensemble size (regression task)" module which
receives "set of feature vectors (data matrix)" and "optimal ensemble size", and
outputs "A2 random forest model";
"learning meta-model to recommend weighting type (detection task)" module which
receives "set of feature vectors (data matrix)" and "optimal weighting type", and
outputs "A3 random forest model" to *production phase* module.

8. The system according to claim 5, **characterized in that** the *production phase* module comprises:
"preparation of time-series data (comprising minimal aggregation, systematic missing values, interpolation)" module which
receives "time-series data with timestamps", and
outputs "time-series to forecast";
"feature engineering by 399 time-series characteristics" module which
receives "time-series to forecast" and "forecasting horizon", and
outputs "feature vector of time-series";
"applying A1 model to rank forecasting methods" module which
receives "feature vector of time-series", and
outputs "methods ranked by suitability";
"applying A2 to estimate ensemble size" module which
receives "feature vector of time-series", and
outputs "recommended ensemble size";
"applying A3 model to decide on the weighting type" module which
receives "feature vector of time-series", and
outputs "recommended weighting type";
"forecasting time-series using ensemble of best methods" module which
receives "forecasting horizon", "methods ranked by suitability",
"recommended ensemble size" and "recommended weighting type",
and outputs "forecasted time-series values".
